# FASCICULE DE BREVET EUROPEEN

(11) **EP 3 053 734 B1**
(45) Date de publication et mention de la délivrance du brevet: **07.09.2022**
(21) Numéro de dépôt: 16154139.6
(22) Date de dépôt: 03.02.2016
(51) Int. Cl.: B29C 70/34, B29C 70/54, B29C 70/16, B29C 53/56, B29L 31/06

(54) **PROCEDE DE FABRICATION DE PIECES EN MATERIAU COMPOSITE**
HERSTELLUNGSVERFAHREN VON TEILEN AUS VERBUNDMATERIAL
METHOD FOR MANUFACTURING PARTS IN COMPOSITE MATERIAL

(30) Priorité: 04.02.2015 FR 1550866
(43) Date de publication de la demande: 10.08.2016
(73) Titulaire: Setforge Société Nouvelle, 42152 l'Horme (FR)
(72) Inventeur: PERRIN, Henri, 57340 BREHAIN (FR); CAUCHOIS, Jean-Pierre, 67150 OBERSTEINBACH (FR); MAYER, Philippe, 57000 METZ (FR); BASTIEN, Antoine, 57645 NOUILLY (FR); KAICI, Bruno, 57000 METZ (FR); BIGOT, Régis, 57645 MONTOY-FLANVILLE (FR); BECKER, Eric, 57385 TETING-SUR-NIED (FR); RISSER, Jean-Marie, 57970 YUTZ (FR)
(74) Mandataire: Lavialle, Bruno François Stéphane

(56) Documents cités:
- DE-A1- 2 945 469
- DE-C2- 2 945 469
- FR-A1- 2 981 001
- US-A1- 2011 186 212

## Description

L'invention concerne un procédé pour fabriquer une pièce en matériau composite, par exemple une pièce tridimensionnelle ou massive, telle qu'une articulation ou une bielle, tout en lui conférant une tenue mécanique élevée.

### ARRIERE PLAN DE L'INVENTION

Il est connu de fabriquer des pièces en matériau composite en intégrant des fibres de renfort courtes dans de la résine thermoplastique, et en procédant à la mise en forme des pièces sous presse. Avec ce procédé, la longueur des fibres est limitée à vingt ou trente millimètres, du fait que ces fibres s'orientent de façon aléatoire dans la résine thermoplastique.

Ce procédé, qui fait partie des procédés dits SMC (Sheet Molding Compound), permet de fabriquer des pièces ayant une densité de fibres comprise entre trente et quarante pourcents, de manière générale, ce qui correspond à des pièces faiblement chargées ayant par là même une tenue mécanique relativement basse. En pratique, ce procédé permet de fabriquer des pièces d'épaisseur régulière et relativement faible, telles que des pièces de carénage ou de capotage pour l'industrie automobile.

Selon un autre procédé connu, un tissu plan de fibres de renfort, pouvant avoir une épaisseur relativement conséquente, est imprégné de résine thermoplastique avant d'être installé dans une presse pour être déformé afin de lui donner un galbe. Plusieurs éléments de ce type peuvent être fabriqués avant d'être collés les uns aux autres par matriçage à chaud.

Il est ainsi par exemple possible de rapporter une pièce à section en L sur une portion plane, pour réaliser une pièce tridimensionnelle à section en T. Ce procédé qui a été développé par la société Carbon Forge permet de fabriquer des pièces comportant des fibres plus longues (comprise entre cinquante et cent millimètres), ayant une densité de fibres plus importante (comprise entre cinquante-cinq et soixante pourcents). Ce procédé permet d'obtenir une tenue mécanique plus élevée, d'autant plus que l'orientation des fibres est sensiblement maîtrisée au lieu d'être désordonnée.

En pratique, cet autre procédé permet de fabriquer des pièces structurelles mais ayant des dimensions faibles, par exemple cent-cinquante par cent-cinquante millimètres, et des formes qui doivent malgré tout être relativement simples.

Dernièrement a été développé un nouveau procédé pour fabriquer en matériau composite une pièce brute ayant une forme massive et/ou tridimensionnelle, comprenant les étapes de :
- placer à chaud au moins un toron de fibres de renfort imprégné de résine thermoplastique en quantité excédentaire pour constituer une préforme de la pièce fabriquée ;
- matricer à chaud cette préforme pour lui donner une forme souhaitée tout en évacuant la résine excédentaire ;
- refroidir la préforme matricée en la maintenant sous pression pour constituer la pièce brute.

Ce procédé, connu du document FR-A-2981001, permet de réaliser une pièce tridimensionnelle ayant une densité élevée de fibres qui sont orientées selon la trajectoire utilisée lors de l'enroulement, ce qui contribue à accroître la tenue mécanique tout en autorisant la fabrication de pièces tridimensionnelles et/ou massives.

Le document US 2011/0186212 A1 divulgue un procédé pour fabriquer une pièce en matériau composite à partir d'une préforme comprenant des fibres longues.

### OBJET DE L'INVENTION

Le but de l'invention est d'améliorer encore les performances mécaniques des pièces en matériau composite à matrice thermoplastique.

### RESUME DE L'INVENTION

A cet effet, l'invention a pour objet un procédé pour fabriquer en matériau composite une pièce ayant une forme massive et/ou tridimensionnelle, selon la revendication 1, comprenant les étapes de :
- disposer des fibres de renfort et de la résine dans un outillage de préformage de manière à constituer une préforme de la pièce ; les fibres de renfort et la résine ayant une masse totale égale à celle de la pièce ; les fibres étant disposées pour s'étendre au moins en partie selon au moins une direction de sollicitation mécanique de la pièce à fabriquer ;
- mettre en forme à chaud cette préforme dans un outillage de mise en forme, en veillant à contenir les fibres et la résine dans l'outillage pour obtenir la pièce ;
- effectuer une phase de refroidissement de la pièce en la maintenant sous pression.

On évite de la sorte une sortie des fibres hors de l'outillage, fibres qui seraient sectionnées lors du matriçage. Ainsi, l'opération de matriçage renforce la pénétration de la résine entre les fibres de renforts sans risquer une coupure des fibres qui altérerait la résistance mécanique de la pièce. Les fibres s'étendant au moins en partie selon au moins une direction de sollicitation mécanique de la pièce à fabriquer sont ainsi disposées et orientées selon une géométrie prédéfinie pour garantir des performances mécaniques de la pièce. Du fait de la rétention des fibres et de la résine lors du matriçage, la masse de la préforme est identique à celle de la pièce finie.

D'autres caractéristiques et avantages de l'invention ressortiront à la lecture de la description qui suit de modes de mise en œuvre particuliers et non limitatifs de l'invention.

### BREVE DESCRIPTION DES FIGURES

Il sera fait référence aux dessins annexés, parmi lesquels :
- la figure 1 est une vue de dessus d'une bielle double fabriquée avec le procédé selon l'invention ;
- la figure 2 montre en perspective le bobinage d'un toron de fibres de renfort autour des reliefs d'un outillage de bobinage pour fabriquer la bielle de la figure 1 conformément à l'invention ;
- la figure 3 est une vue de détail montrant en perspective un relief de bobinage de l'outillage de la figure 2 sous forme de plot comportant un épaulement ;
- la figure 4 est une vue en coupe montrant une possibilité de bobinage d'un toron de fibres de renfort autour d'un plot à épaulement ;
- la figure 5 est une vue montrant une face d'un outillage de matriçage dans lequel est installée une pièce en cours de matriçage ;
- la figure 6 est une vue en perspective d'une articulation fabriquée avec le procédé selon l'invention ;
- la figure 7 est une vue schématique partielle de l'outillage de bobinage utilisé pour la fabrication de la préforme de l'articulation, l'outillage étant présenté après bobinage ;
- la figure 8 est une vue schématique, en perspective éclatée, de cet outillage de bobinage ;
- la figure 9 est une vue schématique, en perspective éclatée, d'un outillage de matriçage utilisé pour le forgeage de l'articulation ;
- la figure 10 est une vue en coupe selon un plan vertical de cet outillage, avant l'opération de forgeage ;
- la figure 11 est une vue analogue à celle de la figure 10, pendant l'opération de forgeage ;
- la figure 12 est une vue analogue à celle de la figure 10, à la fin de l'opération de forgeage ;
- la figure 13 est une vue analogue à celle de la figure 10, d'une deuxième version d'un outillage de matriçage utilisé pour le forgeage de l'articulation ;
- les figures 14a et 14b sont des sections schématiques d'une portion de la préforme de la pièce de la figure 6, avant et après mise en forme.

### DESCRIPTION DETAILLEE DE L'INVENTION

Le procédé de l'invention est ici décrit en application à la fabrication de deux pièces, étant entendu qu'il ne s'agit là que de deux exemples de mise en œuvre du procédé.

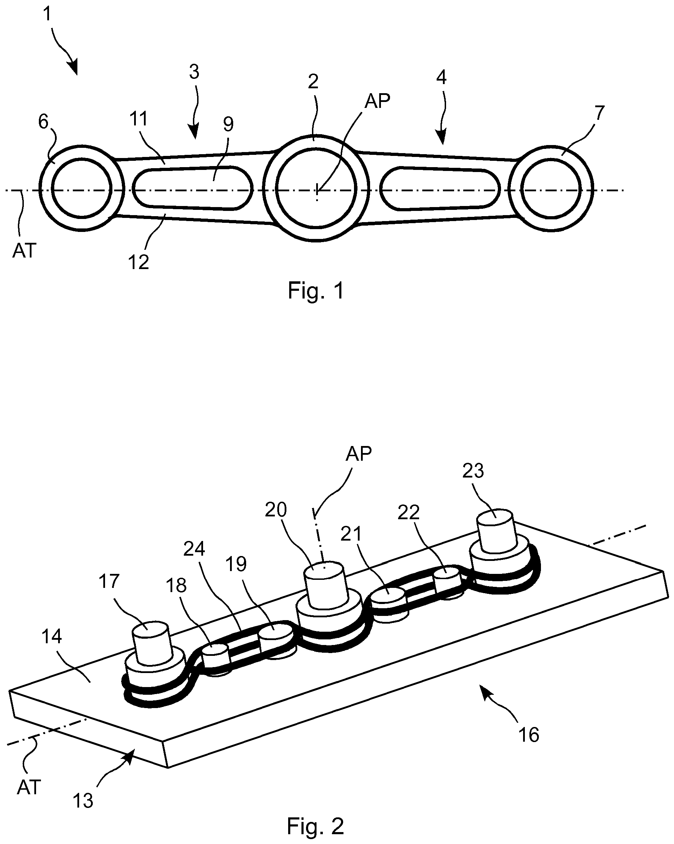

Dans le premier mode de mise en œuvre, la pièce à fabriquer est une bielle double 1 représentée sur la figure 1.

La bielle double 1 comporte un palier central 2 orienté selon un axe principal AP correspondant à un axe normal au plan de la figure 1, et deux bras latéraux 3 et 4 orientés transversalement en s'étendant selon un axe AT perpendiculaire à l'axe AP, et qui partent du palier central 2 dans des directions opposées. Chaque bras est terminé par un palier correspondant, et ces paliers latéraux, repérés par 6 et 7, sont orientés parallèlement au palier central 2.

Chacun des trois paliers a une forme de paroi généralement cylindrique à base circulaire, le palier central ayant un diamètre significativement supérieur à celui des paliers latéraux.

Le bras 3 comporte une paroi plane 9 s'étendant selon un plan normal à la direction principale AP, c'est-à-dire selon le plan de la figure 1, et deux nervures 11 et 12 bordant la région 9. Chaque nervure est une paroi s'étendant perpendiculairement à la paroi plane 9, et qui raccorde le palier central 2 au palier latéral 6. Les deux nervures 11 et 12 sont situées de part et d'autre de l'axe transversal AT qui passe quant à lui par l'axe central de chacun des paliers 2, 6 et 7.

La région centrale 9 a une épaisseur relativement faible par rapport à la hauteur des paliers le long de la direction principale AP, alors que les nervures latérales 11 et 12 ont chacune une hauteur proche de la hauteur des paliers.

La bielle double 1 a une forme qui est symétrique par rapport à un plan normal à l'axe transversal AT et contenant l'axe principal AP qui par ailleurs coïncide avec l'axe central du palier principal 2. Ainsi, le bras 4 est le symétrique du bras 3, de sorte qu'il comporte lui aussi deux nervures du même type.

La bielle double 1 est également symétrique par rapport à un plan contenant l'axe transversal AT et l'axe principal AP, et elle est également symétrique par rapport à un plan normal à l'axe principal AP et contenant l'axe transversal AT.

Cette bielle est fabriquée à l'aide des outillages représentés sur les figures 2 à 5, à savoir un outillage de préformage 16 et un outillage de matriçage ou estampage 31.

L'outil de préformage 16 comporte ici une platine ou sole 13 ayant une face supérieure 14 plane, cette platine étant pourvue de sept reliefs de bobinage qui sont ici des plots, repérés par les références 17 à 23. Plus concrètement, le plot 17 correspond au palier 6, les plots 18 et 19 correspondent à l'espace situé entres les nervures 11 et 12 du bras 3, le plot 20 correspond au palier central 2, les plots 21 et 22 correspondent à l'espace situé entre les nervures du bras 4, et le plot 23 correspond au palier 7.

Comme visible sur la figure 2, un toron 24 de fibres de renfort imprégné de résine thermoplastique est bobiné sur l'outil de préformage 16, autour des plots 17-23, de manière à suivre une trajectoire qui délimite à la fois les trois paliers ou chapes 2, 6, et 7, et les nervures 11 et 12 du bras 3 ainsi que les nervures correspondantes du bras 4. Les fibres de renfort et la résine ont une masse totale égale à celle de la bielle double 1. Le toron de fibres est disposé pour s'étendre selon une trajectoire coïncidant avec les directions de sollicitation de la pièce à fabriquer.

Le toron 24 de fibres de renfort peut se présenter sous différentes formes : il peut s'agir d'un ensemble de fibres organisées parallèlement les unes aux autres ou en hélice ; il peut également s'agir d'un ensemble de fibres tressées les unes avec les autres pour constituer une tresse souple s'étendant globalement selon une direction principale, mais constituée de fibres de fuseau orientées selon de multiples directions.

Le toron 24 imprégné de résine thermoplastique est bobiné autour des différents plots de telle manière que, comme visible sur la figure 2, il entoure complètement le palier 6 pour passer ensuite d'un même côté des plots 18 et 19 avant de changer de côté pour entourer une moitié du plot central 20 pour repasser ensuite d'un même côté des plots 21 et 22 avant d'entourer complètement le deuxième plot latéral 7 pour revenir selon une trajectoire symétrique jusqu'au premier plot latéral 6, ce qui correspond à un tour complet.

Le toron 24 peut ainsi être bobiné sur plusieurs tours autour des différents plots, le nombre de tours étant conditionné par le diamètre de la section du toron vis-à-vis des dimensions de la pièce à fabriquer. Dans l'exemple de la figure 2 qui est donné à titre principalement didactique pour comprendre la trajectoire du toron, celui-ci est bobiné sur un tour et demi.

Comme visible sur les figures, les plots 17 et 23 sont des plots épaulés : il s'agit de plots de révolution comportant une embase cylindrique prolongée par un téton coaxial de plus faible diamètre que l'embase. Cette forme des plots 17 et 23 permet de réaliser des paliers ou chapes dont la surface interne est elle-même chanfreinée, c'est-à-dire qu'elle comporte deux zones ayant deux diamètres différents.

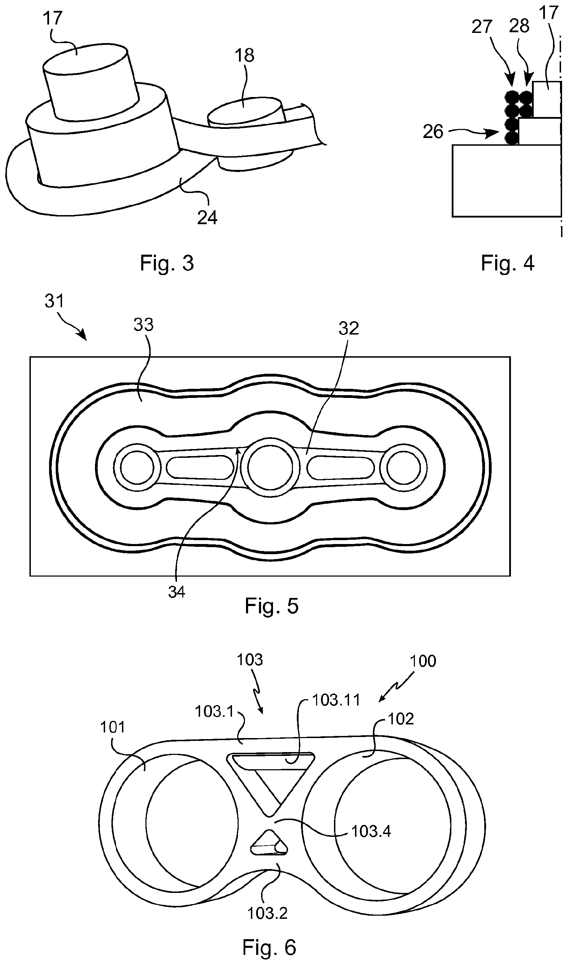

En particulier, et comme visible sur les figures 3 et 4, le toron 24 peut être bobiné sur un nombre de tours important en étant agencé de façon à constituer une seule couche circonférentielle 26 autour de l'embase du plot 17, et deux couches circonférentielles concentriques 27 et 28 autour de l'extrémité supérieure du plot 17 qui présente un diamètre significativement plus faible que son embase.

Ainsi, différentes solutions peuvent être envisagées en ce qui concerne le bobinage du toron sur l'outil de préformage 16, en fonction des particularités de formes que l'on souhaite obtenir au niveau de la pièce à fabriquer.

Le toron 24 imprégné de résine thermoplastique est bobiné sur l'outil 16 à chaud, de manière à avoir la souplesse requise pour permettre un bobinage précis. Avantageusement, l'outillage de bobinage est du type chauffant, et le bobinage en tant que tel peut être réalisé au moyen d'un bras robotisé.

Lorsque le bobinage du toron 24 est entièrement terminé, il constitue une préforme 32 de la pièce à fabriquer. Cette préforme est laissée à refroidir pour qu'elle se solidifie dans sa forme propre.

Lorsque la préforme 32 est solidifiée, elle est extraite de l'outil de préformage 16. A ce titre, les éléments de relief que constituent les plots 17-23 sont avantageusement prévus rétractables par rapport à la platine 13 qui les porte. Dans ce cas, le détachement de la préforme est obtenu en commandant la rétraction des plots 17-23 avant de saisir cette préforme 32 pour la mettre en place dans l'outil de matriçage 31.

L'outil de matriçage 31, représenté en figure 5, comprend une platine 33, formant une matrice, dans laquelle est usinée une empreinte 34 de la forme externe de la double-bielle 1 à fabriquer. Cette matrice est installée dans une presse qui porte au niveau de l'extrémité de son vérin un poinçon ayant une forme complémentaire de l'empreinte.

Lorsque la préforme 32 a été installée dans l'empreinte de l'outil de matriçage 31, le cycle de matriçage peut débuter. La presse est alors commandée pour rapprocher le poinçon et la matrice, jusqu'à établir une pression prédéterminée pendant une durée prédéterminée. La matrice et le poinçon coopèrent ensemble de telle manière que la résine soit contenue, c'est-à-dire qu'elle ne fuit de la matrice. On s'assure en outre qu'aucune fibre ne dépasse de la matrice lors de l'insertion du poinçon pour éviter qu'elle ne soit cisaillée par le poinçon.

Cette opération de matriçage est réalisée à chaud : à ce titre, l'outil de matriçage 31 est avantageusement prévu chauffant et préchauffé pour réchauffer la préforme avant le début du cycle de matriçage.

Le matriçage peut être réalisé en une seule opération ou en plusieurs opérations, en utilisant différentes paires d'outils de matriçage, pour réduire graduellement le volume de la double bielle à fabriquer.

On peut par exemple utiliser un premier outil de matriçage pour former une première ébauche à partir de la préforme 32 en la matriçant. Une fois que cette première ébauche est terminée, cette première ébauche est placée dans un second outil de matriçage, pour réduire encore son volume et constituer la double bielle sous forme de pièce brute.

Les différentes opérations de matriçage sont ici réalisées à une température comprise entre cent soixante et deux cent degrés Celsius pour obtenir un ramollissement de la résine thermoplastique.

La pièce est avantageusement refroidie, au moins partiellement avant son transfert d'un outillage de matriçage vers un autre outillage de matriçage. Après la dernière opération de matriçage, on laisse refroidir l'outillage ainsi que la pièce qu'il contient avant de procéder au démoulage. Ce refroidissement est réalisé tout en maintenant la matrice et le poinçon sous pression pendant toute la durée nécessaire à la solidification de la résine thermoplastique, ce qui permet d'extraire de la matrice une double bielle brute non déformée.

Conformément à l'invention, la fabrication d'une pièce ayant une géométrie différente de cette bielle double est assurée avec des outillages analogues adaptés à cette autre géométrie comme on le va le voir dans le deuxième mode de mise en œuvre qui sera décrit en relation avec les figures 6 à 12 et 14a, 14b.

Dans cette deuxième mise en œuvre, le procédé de l'invention est utilisé pour réaliser l'articulation double représentée à la figure 6 et généralement désignée en 100.

L'articulation double 100 comprend deux paliers 101, 102 d'axes centraux parallèles et reliés l'un à l'autre par un pontet généralement désigné en 103. Le pontet 103 comprend : une première membrure 103.1 s'étendant tangentiellement par rapport aux paliers 101, 102 et ayant une largeur égale à la longueur des paliers 101, 102 (lesdites largeurs et longueurs étant mesurées parallèlement aux axes centraux des paliers) ; une deuxième membrure 103.2 écartée de la première membrure 103.1 et incurvée vers la première membrure 103.1 ; et une troisième membrure 103.3 sensiblement en forme de X s'étendant entre les paliers 101, 102, les première et deuxième membrures 103.1, 103.2. La première membrure 103.1 comprend une nervure longitudinale 103.11 reliant les deux paliers 101, 102.

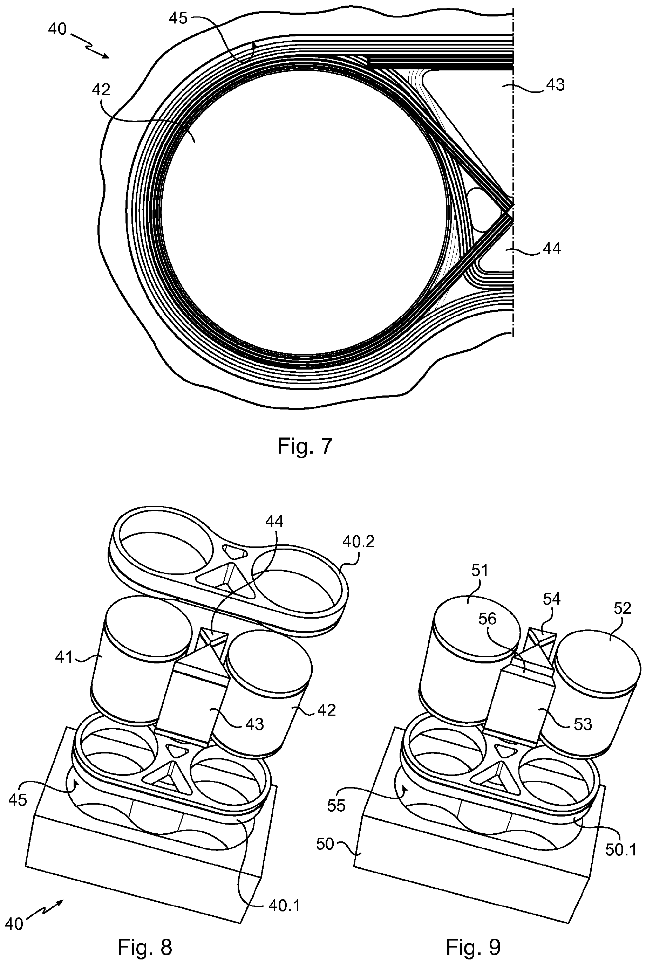

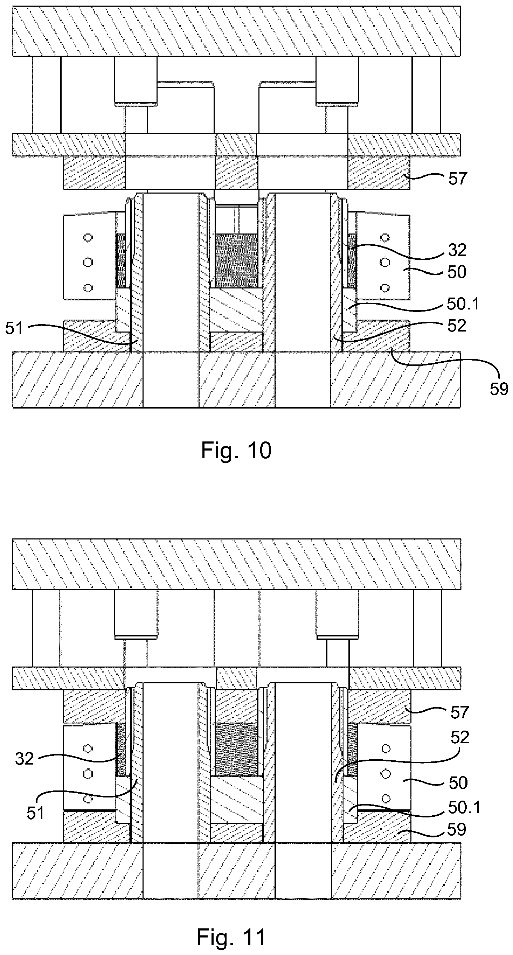

Dans ce deuxième mode de mise en œuvre, on utilise comme outillage de préformage un moule, généralement désigné en 40 sur les figures 7 et 8, comportant une empreinte 45 à la forme extérieure de la préforme (référencée 320 sur la figure 10), deux noyaux 41, 42 pour former les paliers 101, 102, un noyau 43 pour former la première membrure 103.1 (sans la nervure) et la partie de la troisième membrure 103.3 en regard de la première membrure 103.1, et un noyau 44 pour former la deuxième membrure 103.2 et la partie de la troisième membrure 103.3 en regard de la deuxième membrure 103.2. Dans l'empreinte 45 du moule 40 est montée une platine mobile 40.1 qui coulisse sur les noyaux et qui est à la forme de la préforme. Le moule 40 est fermé par un couvercle 40.2 qui est de même forme que la platine 40.1 et qui pénètre dans l'empreinte 45 du moule 40.

L'outil de matriçage, représenté sur les figures 9 à 12, comprend une matrice 50 comportant une empreinte 55 à la forme extérieure de la préforme 320, deux noyaux 51, 52 pour former les paliers 101, 102, un noyau 53 pour s'étendre entre la première membrure 103.1 et la partie de la troisième membrure 103.3 en regard de la première membrure 103.1, et un noyau 54 pour s'étendre entre la deuxième membrure 103.2 et la partie de la troisième membrure 103.3 en regard de la deuxième membrure 103.2. Le noyau 53 comprend un décrochement 56 pour ménager un espace pour la nervure 103.11 de manière à définir l'une des surfaces latérales et le bord extrême de la nervure 103.11. La matrice 50 est fermée d'un côté par un fond 50.1 et de l'autre par un couvercle 57 à la forme extérieure de la préforme 320 qui pénètre partiellement dans l'empreinte 55 de la matrice 50. Le couvercle 57 comprend une portion en saillie 58 (visible sur la figure 10) s'étendant en regard du noyau 53 pour définir l'autre des surfaces latérales de la nervure 103.11. Le fond 50.1 et les noyaux sont solidaires d'une platine 59 solidaire d'un plateau d'une presse. Le fond 50.1 coulisse dans la matrice parallèlement aux axes centraux des noyaux. Le couvercle est solidaire d'un plateau monté sur le vérin de la presse.

Lors de la fabrication de la préforme 320, les fibres sont disposées dans l'empreinte 45 de l'outillage de préformage, autour des noyaux 41 à 44, de manière à s'enrouler autour des noyaux 41, 42 et à s'étendre le long d'une direction longitudinale des futures membrures 103.1 à 103.3. Dans ce mode de mise en œuvre, les fibres sont dites continues car elles ont une longueur de plusieurs fois la longueur de la pièce, cinq à six fois la longueur de la pièce.

Au début de la mise en place des fibres, la platine inférieure 40.1 se trouve vers le haut du moule 40 et descend au fur et à mesure que l'épaisseur de fibres bobinées augmente.

Une fois la mise en place des fibres terminée, de la résine thermoplastique est ensuite introduite à chaud dans l'empreinte du moule 40 pour remplir celle-ci avant fermeture du couvercle. Le couvercle 40.2 est ensuite mis en place pour comprimer légèrement l'ensemble.

Après refroidissement de la résine, la préforme 320 est sortie du moule 40.

Tant le couvercle 40.2 que la platine inférieure 40.1 sont agencés pour que subsiste un surplus local de résine thermoplastique et de fibres sur les côtés de la première membrure 103.1 de la préforme 320.

Une fois refroidie, la préforme 320 est introduite dans l'outil de matriçage qui est chauffé pour ramollir la préforme 320 (figure 10).

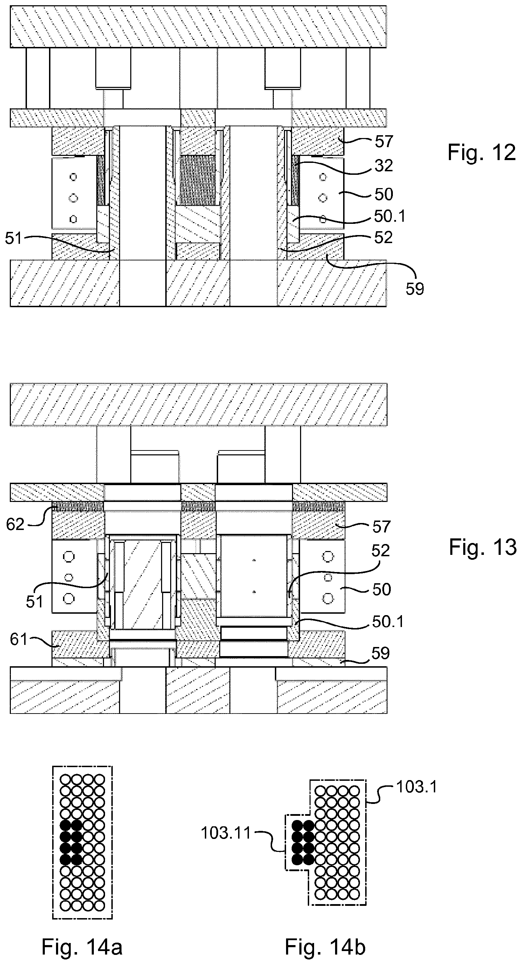

Le couvercle 57 est appliqué contre la préforme de manière à diminuer l'épaisseur de la préforme et l'amener à celle de la pièce finie (figure 11) et à former la nervure (figure 12, 14a et 14b). Le surplus local précité de matériau composite (résine et fibres situées au-dessus et au-dessous de la future première membrure, figure 14a) est déplacé et repousse une partie de la résine et des fibres (ces fibres sont symbolisées en noir sur les figures 14a, 146) qui se trouve au centre de la future première membrure vers l'espace laissé entre le renfoncement 56 du noyau 53 et la portion 58 en saillie du couvercle 56 pour former la nervure (figure 14b) .

Dans la variante de la figure 13, les noyaux 51, 52 sont équipés de moyens de chauffage. La matrice 50 et le couvercle 56 sont thermiquement isolés des plateaux de la presse les supportant par des plaques d'isolant thermique 61, 62 respectivement.

Le placement des fibres contribue à conférer à la pièce fabriquée une tenue mécanique importante, en plus de permettre la fabrication de pièces tridimensionnelles et/ou massives pouvant avoir une forme complexe. D'une manière générale, l'invention permet de réaliser une pièce tridimensionnelle ayant une densité de fibres élevée, pouvant atteindre cinquante-cinq à soixante-cinq pourcents de fibres. De préférence, ces fibres se présentent sous forme d'un ou plusieurs torons de fibres continues et orientées selon la trajectoire utilisée lors de l'enroulement.

Les fibres longues sont disposées et orientées pour garantir les performances mécaniques de la pièce en s'étendant au moins en partie selon au moins une direction de sollicitation mécanique de la pièce à fabriquer. Concrètement, toute la phase de mise en place des fibres permet de positionner et d'orienter les fibres dans un état très proche de celui qu'elles vont avoir dans la pièce finie : l'orientation des fibres peut ainsi être complètement optimisée par rapport aux besoins techniques et mécaniques de la pièce. La phase de matriçage qui suit le placement des fibres permet d'obtenir une géométrie souhaitée, avec un degré de précision élevé.

Par ailleurs, il est possible de placer un insert dans la préforme pour que celui-ci soit intégré à la pièce finie en étant rigidement solidarisé au corps de la pièce finie afin de faciliter par exemple les transferts d'efforts. Un tel insert est typiquement un élément d'une nature autre que le corps de la pièce, comme par exemple un insert de type métallique, un capteur, un palier, une partie d'assemblage ou de fixation. Le procédé comprend alors l'étape de placer dans l'outillage de préformage au moins un insert pour que l'insert soit intégré dans le matériau de la préforme. A cette fin, le ou les inserts sont ici disposés dans le moule avant placement des fibres et les fibres sont disposées pour entourer au moins en partie l'insert et participer à sa retenue dans la préforme.

Ainsi, ce procédé de fabrication permet de fabriquer en matériau composite des pièces initialement fabriquées en acier ou autre, pour les remplacer par des pièces en matériau composite ayant un poids et/ou un volume plus faible et une tenue mécanique comparable selon un cas de charge donné.

On notera que l'outillage de mise en forme est de préférence agencé pour que la pièce obtenue présente des caractéristiques géométriques finales de la pièce à fabriquer. Ceci permet de limiter les reprises d'usinage à réaliser après la mise en forme.

Bien entendu, l'invention n'est pas limité aux modes de mise en œuvre décrits mais englobe toute variante de réalisation entrant dans le champ de l'invention telle que définie par les revendications.

Le procédé selon l'invention permet de fabriquer des pièces ayant des formes complexes, s'étendant selon les trois dimensions, et pouvant également être massives soit dans des régions localisées, soit sur l'ensemble de la pièce.

Dans le premier exemple, la pièce est obtenue en bobinant un seul toron de fibres. Mais dans le cas d'une pièce de forme plus complexe, il est tout à fait possible de bobiner plusieurs torons correspondant par exemple à plusieurs parties de la pièce à fabriquer.

Dans le même mode de mise en œuvre, les fibres de renfort sont pré-imprégnées de résine thermoplastique. En variante, pour fabriquer la double bielle, on pourrait utiliser des fibres sèches mises en place dans un outillage formant moule dans lequel la résine thermoplastique serait introduite ultérieurement.

Inversement, dans le deuxième mode de mise en œuvre, des fibres sèches sont utilisées. En variante, on pourrait utiliser des fibres pré-imprégnées.

Les fibres peuvent être en tout matériau susceptible de renforcer mécaniquement le matériau thermoplastique compte tenu des performances recherchées et notamment en polyaramide, verre, carbone... La préforme peut comprendre des fibres de matériaux différents.

Les fibres sont longues c'est-à-dire qu'elles ont une longueur minimale sensiblement de l'ordre de la longueur de la pièce. Les fibres ont de préférence une longueur au moins sensiblement égale à un multiple entier -par exemple deux, trois, quatre ou plus- de la longueur de la pièce. Néanmoins, certaines des fibres peuvent être courtes, c'est-à-dire avoir une longueur inférieure à une longueur de la pièce brute. Des fibres courtes peuvent être rajoutées en complément dans certaines zones.

Des fibres ayant une fonction autre que le renfort peuvent également être rajoutées dans la résine ou combinées aux fibres de renfort, et par exemple des fibres optiques ou toutes autres fibres susceptibles de transmettre un signal. Ces fibres conductrices de signal peuvent par exemple avoir une extrémité reliée à un capteur noyé dans la pièce et une extrémité opposée débouchant à l'extérieur de la pièce pour être raccordée à une unité de traitement du signal.

Le procédé peut comprendre l'étape de compresser la préforme avant durcissement de la résine afin d'obtenir un taux volumique de fibres prédéterminé

La résine peut être en différents matériaux thermoplastiques et par exemple en : polypropylène, polyamide, acrylique, polyéthylène sulfone (PES), polyétherester cétone (PEEK), polyéther cétone cétone (PEKK), polyéther imide (PEI)...

Le procédé peut comprendre l'étape ultérieure d'assembler plusieurs pièces, dites intermédiaires, entre elles pour obtenir une pièce finale.

Le refroidissement peut être obtenu par la mise en œuvre d'un cycle thermique piloté ou non (cas d'un refroidissement libre).

## Revendications

1. Procédé pour fabriquer une pièce (1) en matériau composite, comprenant les étapes de :
- disposer des fibres longues de renfort (24) et de la résine dans un outillage de préformage (16) de manière à constituer une préforme (32 ; 320) de la pièce (1) ; les fibres de renfort et la résine ayant une masse totale égale à celle de la pièce ; les fibres longues étant disposées pour s'étendre au moins en partie selon au moins une direction de sollicitation mécanique de la pièce à fabriquer ;
- mettre en forme à chaud et à une pression prédéterminée pendant une durée prédéterminée cette préforme (32 ; 320) dans un outillage de mise en forme (31) comprenant une matrice et un poinçon, en veillant à ce qu'aucune fibre ne dépasse de la matrice lors de l'insertion du poinçon pour éviter qu'elle ne soit cisaillée par le poinçon, la matrice et le poinçon coopérant ensemble de telle manière que la résine ne fuit pas de la matrice, de manière à contenir les fibres et la résine dans l'outillage pour obtenir la pièce ;
- effectuer une phase de refroidissement de la pièce en la maintenant sous pression.

2. Procédé selon la revendication 1, dans lequel l'outillage de mise en forme est agencé pour que la pièce obtenue présente des caractéristiques géométriques finales de la pièce à fabriquer.

3. Procédé selon l'une quelconque des revendications précédentes, dans lequel des fibres de fonctionnalités différentes des fibres de renfort sont combinées aux fibres de renfort.

4. Procédé selon l'une quelconque des revendications précédentes, comprenant l'étape de placer dans l'outillage de préformage au moins un insert pour que celui-ci soit intégré dans le matériau de la préforme, les fibres étant disposées pour entourer l'insert et participer à sa retenue dans la préforme.

5. Procédé selon l'une quelconque des revendications précédentes, comprenant l'étape de compresser la préforme avant durcissement de la résine afin d'obtenir un taux volumique de fibres prédéterminé, les quantités relatives de fibres et de résine étant choisies en fonction de ce taux volumique.

6. Procédé selon la revendication 5, dans lequel le taux volumique de fibres prédéterminé est d'environ 65% dans la pièce.

7. Procédé selon l'une quelconque des revendications précédentes, dans lequel on utilise un outillage de préformage (16) pourvu de reliefs pour le placement des fibres.

8. Procédé selon la revendication 7, dans lequel les reliefs (17-23) sont rétractables.

9. Procédé selon l'une quelconque des revendications précédentes, dans lequel on utilise un outillage de préformage (16) et un outillage de mise en forme (31) distincts, et dans lequel la préforme (32) est refroidie avant d'être transférée depuis l'outillage de préformage vers l'outillage de mise en forme.

10. Procédé selon l'une quelconque des revendications précédentes, dans lequel les fibres sont pré-imprégnées de résine avant leur mise en place dans l'outillage de préformage.

11. Procédé selon l'une quelconque des revendications 1 à 9, dans lequel les fibres sont sèches lors de leur mise en place dans l'outillage de préformage.

12. Procédé selon l'une quelconque des revendications précédentes, dans lequel les fibres ont une longueur au moins supérieure ou égale à un multiple entier d'une longueur de la pièce.

13. Procédé selon l'une quelconque des revendications précédentes, dans lequel l'outillage de préformage comprend une platine mobile (40.1) montée pour coulisser dans une empreinte recevant les fibres, la platine mobile (40.1) se trouvant vers le haut de l'empreinte au début de la mise en place des fibres dans l'empreinte et descendant au fur et à mesure que l'épaisseur de fibres mises en place augmente.

14. Procédé selon l'une quelconque des revendications précédentes, dans lequel au moins une partie des fibres est disposée de manière à se déplacer, lors de la mise en forme à chaud, vers une position finale.

15. Procédé selon l'une quelconque des revendications précédentes, dans lequel, il est prévu lors du préformage, un surplus local de matériau dans une zone de la préforme de manière à former par déplacement de matériau lors de la mise en forme une nervure en un autre endroit de la pièce.

## Patentansprüche

1. Verfahren zum Herstellen eines Teils (1) aus einem Verbundwerkstoff, umfassend die Schritte:
- Anordnen von langen Verstärkungsfasern (24) und von Harz in einem Vorformwerkzeug (16), um einen Vorformling (32; 320) des Teils (1) zu bilden; wobei die Verstärkungsfasern und das Harz eine Gesamtmasse haben, die gleich der des Teils ist; wobei die langen Fasern so angeordnet sind, dass sie sich zumindest teilweise in mindestens einer Richtung der mechanischen Beanspruchung des herzustellenden Teils erstrecken;
- Warmformen dieses Vorformlings (32; 320) und Setzen desselben für eine vorbestimmte Zeit unter einen vorbestimmten Druck in einem Formwerkzeug (31), das eine Matrize und einen Stempel umfasst, wobei darauf geachtet wird, dass während des Einfügens des Stempels keine Faser aus der Matrize herausragt, um zu verhindern, dass sie durch den Stempel abgeschnitten wird, wobei die Matrize und der Stempel derart zusammenwirken, dass das Harz nicht aus der Matrize ausläuft, derart, dass die Fasern und das Harz in dem Werkzeug enthalten sind, um das Teil zu erhalten;
- Durchführen einer Abkühlungsphase zum Abkühlen des Teils, während es unter Druck gehalten wird.

2. Verfahren nach Anspruch 1, bei dem das Formwerkzeug derart ausgebildet ist, dass das erhaltene Teil endgültige geometrische Merkmale des herzustellenden Teils aufweist.

3. Verfahren nach einem der vorhergehenden Ansprüche, bei dem Fasern mit anderen Funktionalitäten als Verstärkungsfasern mit den Verstärkungsfasern kombiniert werden.

4. Verfahren nach einem der vorhergehenden Ansprüche, umfassend den Schritt des Platzierens mindestens eines Einsatzes in dem Vorformwerkzeug, damit dieser Einsatz in den Werkstoff des Vorformlings integriert wird, wobei die Fasern so angeordnet sind, dass sie den Einsatz umgeben und an seinem Halten in dem Vorformling teilhaben.

5. Verfahren nach einem der vorhergehenden Ansprüche, umfassend den Schritt des Komprimierens des Vorformlings vor dem Aushärten des Harzes, um einen vorbestimmten Faservolumenanteil zu erhalten, wobei die relativen Mengen an Fasern und Harz in Abhängigkeit von diesem Volumenanteil gewählt werden.

6. Verfahren nach Anspruch 5, bei dem der vorbestimmte Faservolumenanteil ungefähr 65% in dem Teil ist.

7. Verfahren nach einem der vorhergehenden Ansprüche, bei dem man ein Vorformwerkzeug (16) verwendet, das mit Reliefelementen für die Platzierung der Fasern versehen ist.

8. Verfahren nach Anspruch 7, bei dem die Reliefelemente (17-23) einziehbar sind.

9. Verfahren nach einem der vorhergehenden Ansprüche, bei dem man ein Vorformwerkzeug (16) und ein Formwerkzeug (31) verwendet, die separat sind, und bei dem der Vorformling (32) gekühlt wird, ehe er von dem Vorformwerkzeug zum Formwerkzeug übertragen wird.

10. Verfahren nach einem der vorhergehenden Ansprüche, bei dem die Fasern mit Harz vorimprägniert werden, ehe sie in dem Vorformwerkzeug platziert werden.

11. Verfahren nach einem der Ansprüche 1 bis 9, bei dem die Fasern während ihres Platzierens in dem Vorformwerkzeug getrocknet werden.

12. Verfahren nach einem der vorhergehenden Ansprüche, bei dem die Fasern eine Länge haben, die mindestens größer oder gleich einem ganzzahligen Vielfachen einer Länge des Teils ist.

13. Verfahren nach einem der vorhergehenden Ansprüche, bei dem das Vorformwerkzeug eine bewegliche Platte (40.1) umfasst, die in einem die Fasern aufnehmenden Hohlraum verschiebbar gelagert ist, wobei sich die bewegliche Platte (40.1) zu Beginn des Platzierens der Fasern in dem Hohlraum oben befindet und sich mit zunehmender Dicke an platzierten Fasern nach unten bewegt.

14. Verfahren nach einem der vorhergehenden Ansprüche, bei dem mindestens ein Teil der Fasern so angeordnet ist, dass er sich während des Warmformens in eine endgültige Position bewegt.

15. Verfahren nach einem der vorhergehenden Ansprüche, bei dem während des Vorformens ein lokaler Werkstoffüberschuss in einem Bereich des Vorformlings vorgesehen ist, um durch Werkstoffverschiebung während des Formens eine Rippe an einer anderen Stelle des Teils auszubilden.

## Claims

1. Method for manufacturing a composite material part (1), comprising the steps of:
- disposing long reinforcing fibres (24) and resin in a preforming tool (16) so as to form a preform (32; 320) of the part (1), the reinforcing fibres and the resin having a total mass equal to that of the part, the long fibres being disposed to extend at least partly in at least one direction of mechanical load on the part to be manufactured;
- thermoforming this preform (32; 320) at a predetermined pressure for a predetermined time in a forming tool (31) comprising a die and a punch, taking care that no fibre projects from the die during insertion of the punch to prevent it being sheared by the punch, the die and the punch co-operating so that the resin does not escape from the die, so as to contain the fibres and the resin in the tool to obtain the part;
- carrying out a phase of cooling the part while keeping it under pressure.

2. Method according to Claim 1, in which the forming tool is such that the part obtained has the final geometric characteristics of the part to be manufactured.

3. Method according to either one of the preceding claims, in which fibres having a different function from the reinforcing fibres are combined with the reinforcing fibres.

4. Method according to any one of the preceding claims, comprising the step of placing at least one insert in the preforming tool so that it is integrated into the material of the preform, the fibres being disposed to surround the insert and participate in its retention in the preform.

5. Method according to any one of the preceding claims, comprising the step of compressing the preform before the resin hardens in order to obtain a predetermined volume ratio of fibres, the relative quantities of fibres and resin being chosen according to this volume ratio.

6. Method according to claim 5, in which the predetermined fibre volume ratio in the part is about 65%.

7. Method according to any one of the preceding claims, using a preforming tool (16) provided with reliefs for placing the fibres.

8. Method according to claim 7, in which the reliefs (17-23) are retractable.

9. Method according to any one of the preceding claims, using a preforming tool (16) and a forming tool (31) that are separate and in which the preform (32) is cooled before being transferred from the preforming tool to the forming tool.

10. Method according to any one of the preceding claims, in which the fibres are pre-impregnated with resin before they are placed in the preforming tool.

11. Method according to any one of claims 1 to 9, in which the fibres are dry when they are placed in the preforming tool.

12. Method according to any one of the preceding claims, in which the fibres have a length greater than or equal to an integer multiple of a length of the part.

13. Method according to any one of the preceding claims, in which the preforming tool comprises a movable platen (40.1) mounted to slide in an imprint receiving the fibres, the movable platen (40.1) being located toward the top of the imprint at the beginning of placing the fibres in the imprint and descending as the thickness of the placed fibres increases.

14. Method according to any one of the preceding claims, in which at least some of the fibres are disposed so as to move toward a final position during thermoforming.

15. Method according to any one of the preceding claims, in which, during preforming, a local surplus of material is provided in a zone of the preform so as to form a rib elsewhere on the part by displacement of material during forming.
